# EUROPEAN PATENT SPECIFICATION

(11) **EP 2 165 918 B1**
(45) Date of publication and mention of the grant of the patent: **30.10.2013**
(21) Application number: 09170880.0
(22) Date of filing: 21.09.2009
(51) Int. Cl.: B62D 21/14, B62D 21/20, B62D 63/06, B62D 53/00, B62D 53/06

(54) **A sliding bogie link trailer**
Anhänger mit verschiebbarem Fahrwerkrahmen
Remorques à châssis coulissant

(30) Priority: 19.09.2008 IE 20080762
(43) Date of publication of application: 24.03.2010
(73) Proprietor: Dennison Trailers Limited, Naas, Kildare (IE)
(72) Inventor: Dennison, David, Straffan, County Kildare (IE)
(74) Representative: Schütte, Gearoid

(56) References cited:
- EP-A1- 0 107 746
- WO-A1-96/13420
- WO-A1-97/08040
- AU-B2- 716 147
- FR-A1- 2 715 627

## Description

### Introduction

This invention relates to semi-trailers, and in particular to sliding bogie link trailers.

### Background of the Invention

It is known to provide a sliding bogie link trailer having a front trailer part and a rear trailer part which are slidably interconnected, the front trailer part having a kingpin for connection to a fifth wheel of a tractor vehicle for towing the trailer, the rear trailer part having an axle with ground-engaging wheels and a fifth wheel being mounted at a rear end of the rear trailer part for towing another trailer. The two trailer parts are telescopically slidable between a collapsed position in which the rear trailer part locates beneath a rear end of the front trailer part and an extended position in which the rear trailer part extends rearwardly of the front trailer part exposing the fifth wheel on the rear trailer part for use of the fifth wheel to tow another trailer behind the sliding bogie link trailer. Thus, for example, a semi-trailer and its cargo, such as a container, can be towed behind the sliding bogie link trailer (which also carries cargo) when it is in the extended position for delivery to a desired destination. At the destination the semi-trailer is uncoupled from the sliding bogie link trailer. After collapsing the rear trailer part into the front trailer part the sliding bogie link trailer can be delivered with its cargo to another destination.

Typically in such sliding bogie link trailers the two trailer parts slidably engage by means of a friction slide. This could be by metal to metal contact between the two trailer parts. More usually though a rubbing strip is provided between the two trailer parts to reduce wear and more easily facilitate mutual sliding between the trailer parts. However, the two trailer parts have a tendency to bind in the extended position due to the load (such as a container) being carried on the front trailer part and often difficulty is encountered in sliding the rear trailer part into the collapsed position beneath the front trailer part. To overcome this difficulty in some cases a ram has been installed between the two trailer parts, the ram being operable to move the trailer parts between the collapsed stored position and the extended position. However, this increases the cost of manufacture and could damage the slide mechanism through forced sliding of the trailer parts.

The present invention is directed towards overcoming these problems.

EP 0107746 discloses a sliding bogie link trailer in which the two trailer parts slidably engage by a friction slide. WO 97/08040 discloses an extendable flat bed trailer having a front trailer part and a rear trailer part which are telescopically slidable together and apart by means of rollers engaged between the front and rear trailer parts.

FR 2 715 627 discloses the preamble of claim 1.

### Summary of the Invention

According to the invention there is provided a sliding bogie link trailer having a front trailer part and a rear trailer part which are slidably interconnected, the front trailer part having a kingpin for connection to a fifth wheel of a tractor vehicle for towing the trailer, the rear trailer part having an axle with ground-engaging wheels and a fifth wheel being mounted at a rear end of the rear trailer part for towing another trailer, the two trailer parts being slidably interconnected by means of first and second roller assemblies which are provided spaced-apart on the trailer for engagement between said front trailer part and said rear trailer part, said first roller assembly comprising rollers mounted at a rear end of the front trailer part for rolling engagement with a top of an associated roller track on the rear trailer part, said second roller assembly comprising rollers mounted at a front end of the rear trailer part for rolling engagement with an associated roller track on the front trailer part, the rollers of the second roller assembly being engagable with an associated roller track formed by top faces of lower flanges of I beams forming longitudinal chassis members of the front trailer part, said lower flanges being offset inwardly on upright webs of the I beams, characterised in that the first roller assembly comprises a pair of roller elements rotatably mounted on inner faces of webs of the I beams forming longitudinal chassis members of the front trailer part, and the second roller assembly comprises a pair of roller elements rotatably mounted on an outside of each web of longitudinal chassis beams of the rear trailer part.

In a further embodiment a third roller assembly is mounted on one of said trailer parts for engagement with the other said trailer parts.

In another embodiment a fourth roller assembly is provided for engagement between the two trailer parts when the trailer parts are in a collapsed stored position.

In another embodiment the second roller assembly is engagable between the two trailer parts intermediate the first and third roller assemblies when the trailer parts are in the extended position.

In another embodiment the first and third roller assemblies are mounted longitudinally spaced-apart at a rear end of the front trailer part and the second roller assembly is mounted at a front end of the rear trailer part.

In another embodiment the first and third roller assemblies engage with a top of the rear trailer part. Conveniently the first and third roller assemblies are engagable with top faces of I beams forming longitudinal chassis members of the rear trailer part, said top faces forming roller tracks.

### Brief Description of the Drawings

The invention will be more clearly understood by the following description of some embodiments thereof, given by way of example only with reference to the accompanying drawings, in which:
Fig. 1 is a side elevational view of a sliding bogie link trailer according to the invention, shown in a collapsed position;
Fig. 2 is a side elevational view of the trailer, shown in an extended position;

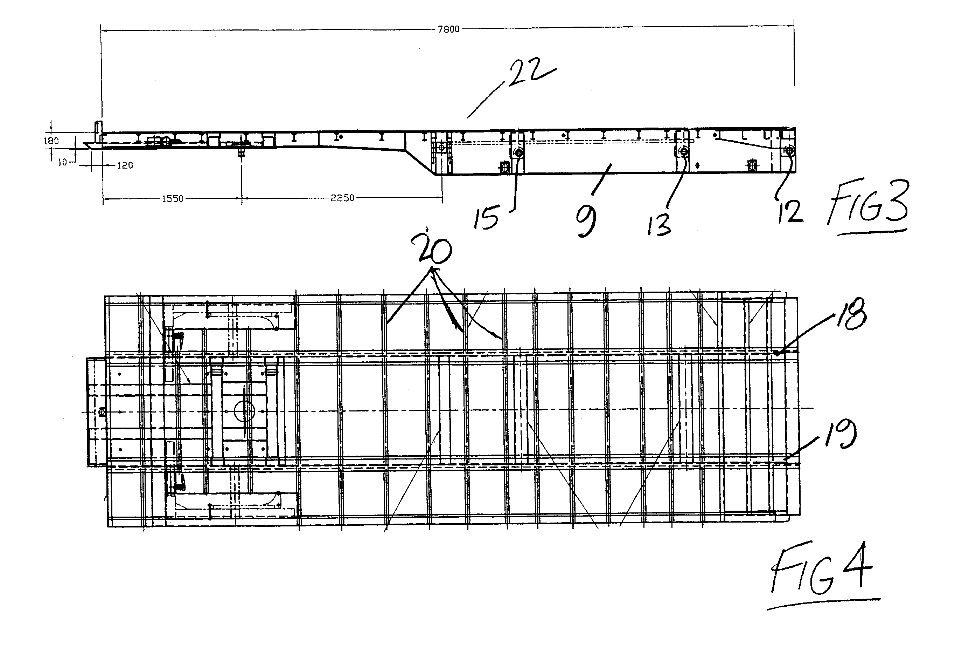

Fig. 3 is a side elevational view of a front part of the trailer;
Fig. 4 is a plan view of the front part of the trailer;
Fig. 5 is a detail side elevational view showing a rear end of the front part of the trailer;
Fig. 6 is a sectional view taken along the line VI-VI of Fig. 5;
Fig. 7 is a detail sectional view taken along the line VII-VII of Fig. 6;
Fig. 8 is detail sectional view taken along the line VIII-VIII of Fig. 5;
Fig. 9 is a detail view taken along the line IX-IX of Fig. 8;
Fig. 10 is an elevational view of a rear part of the trailer without the fifth wheel;
Fig. 11 is a plan view of the rear part of the trailer shown in Fig. 10;
Fig. 12 is a detail sectional view showing portion of the trailer;
Fig. 13 is a detail plan view showing a front end of the rear trailer part of Fig. 10; and
Figs. 14 to 18 are various detail views showing portions of the rear part of the trailer.

### Detailed Description of Preferred Embodiments

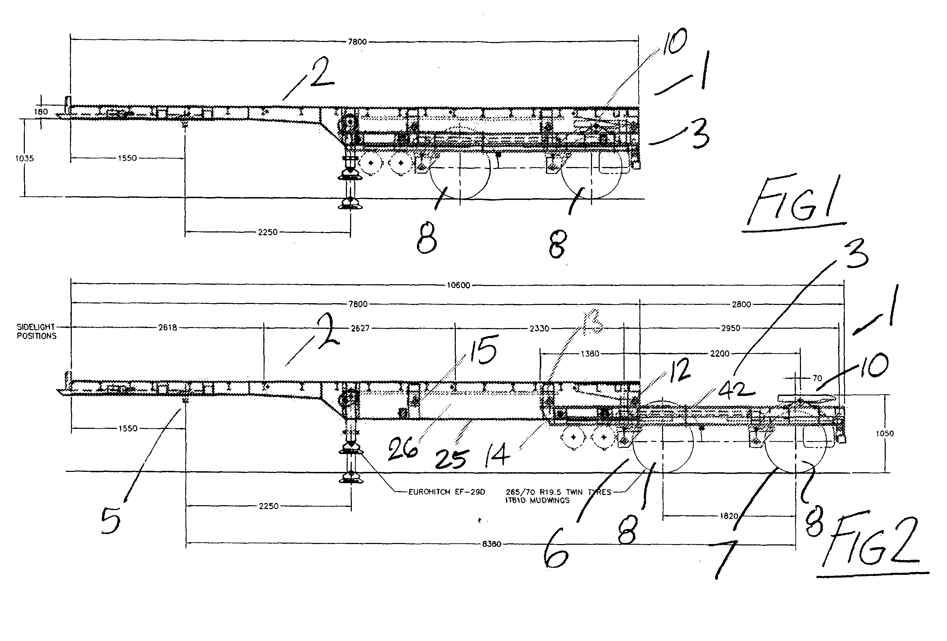

Referring to the drawings there is illustrated a sliding bogie link trailer according to the invention indicated generally by the reference numeral 1. The trailer 1 has a front trailer part 2 and an associated rear trailer part 3 which are slidably interconnected. The front trailer part 2 has a kingpin 5 for connection to a fifth wheel of a tractor vehicle (not shown) for towing the trailer 1. The rear trailer part 3 has a pair of spaced-apart axles 6, 7 each carrying a pair of ground-engaging road wheels 8. A fifth wheel 10 is mounted at a rear end of the rear trailer part 3 for towing another trailer behind the sliding bogie link trailer 1. In accordance with the present invention the two trailer parts 2, 3 are slidably interengaged by means of roller assemblies 12, 13, 14, 15. These roller assemblies 12, 13, 14, 15 facilitate sliding interengagement of the trailer parts 2, 3 for movement of the trailer parts 2, 3 between a collapsed stored position as shown in Fig. 1 and an extended towing position as shown in Fig. 2.

Each of the roller assemblies 12, 13, 14, 15 comprises a pair of roller elements mounted on longitudinal chassis members of the trailer parts 2, 3 for rolling engagement with the other trailer part 2, 3. A first roller assembly 12 and a third roller assembly 13 are mounted longitudinally spaced-apart at a rear end of the front trailer part 2. The front trailer part 2 essentially comprises two spaced-apart parallel longitudinal beams 18, 19 of I section. A number of spaced-apart parallel cross-beams 20 extend transversely on the longitudinal beams 18, 19 to form a load bed 22 for reception of a container or the like.

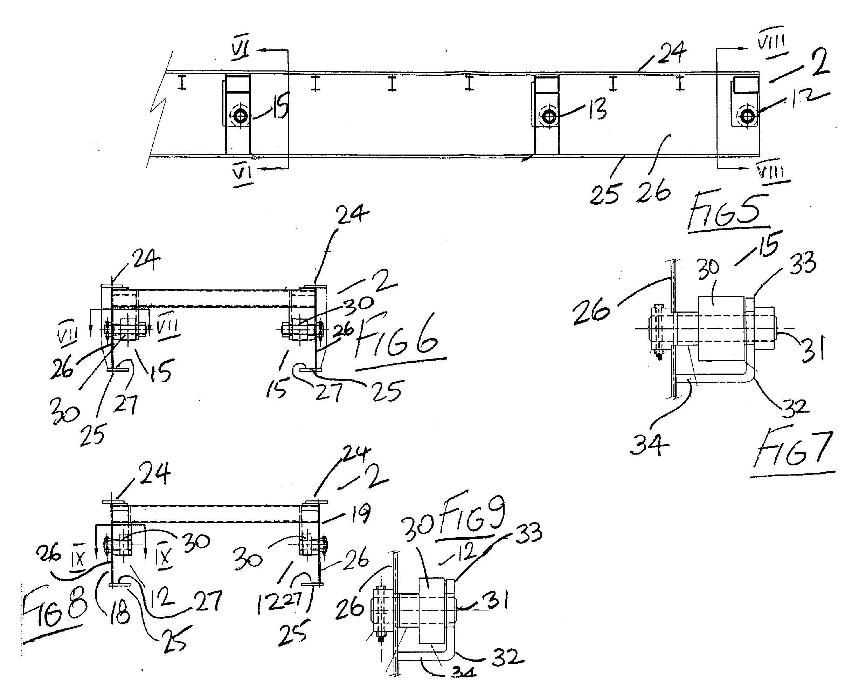

As shown in Fig. 8, each longitudinal beam 18, 19 has a flat upper flange 24 and flat lower flange 25 interconnected by an upright web 26 extending therebetween. It will be noted that the lower flanges 25 are offset inwardly. Top faces 27 of the lower flanges 25 form roller tracks for rollers of second roller assembly 14 on the rear trailer part 3. The first roller assembly 12 comprises a pair of roller elements 30 rotatably mounted on pins 31 mounted on the webs 26. An L-shaped roller support arm 32 mounted on an inner face of the web 26 has an inner portion 33 parallel to the web 26 and an outer portion 34, perpendicular to the inner portion 33, which is attached to the web 26. An inner end of the pin 31 is supported on the inner portion 33 of the arm 32. The third roller assembly 13 and fourth roller assembly 15 are of similar arrangement.

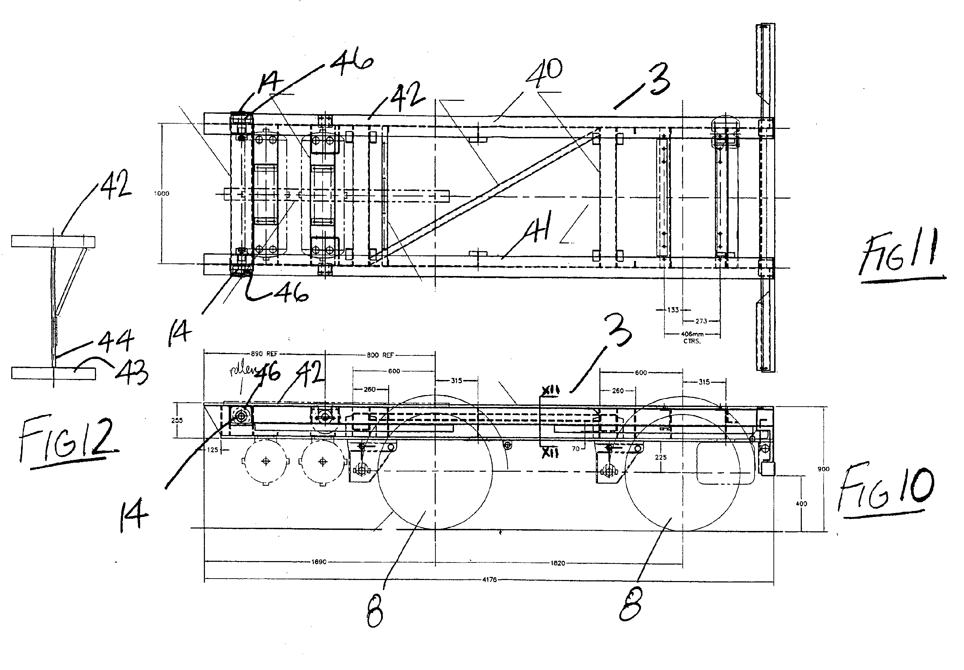

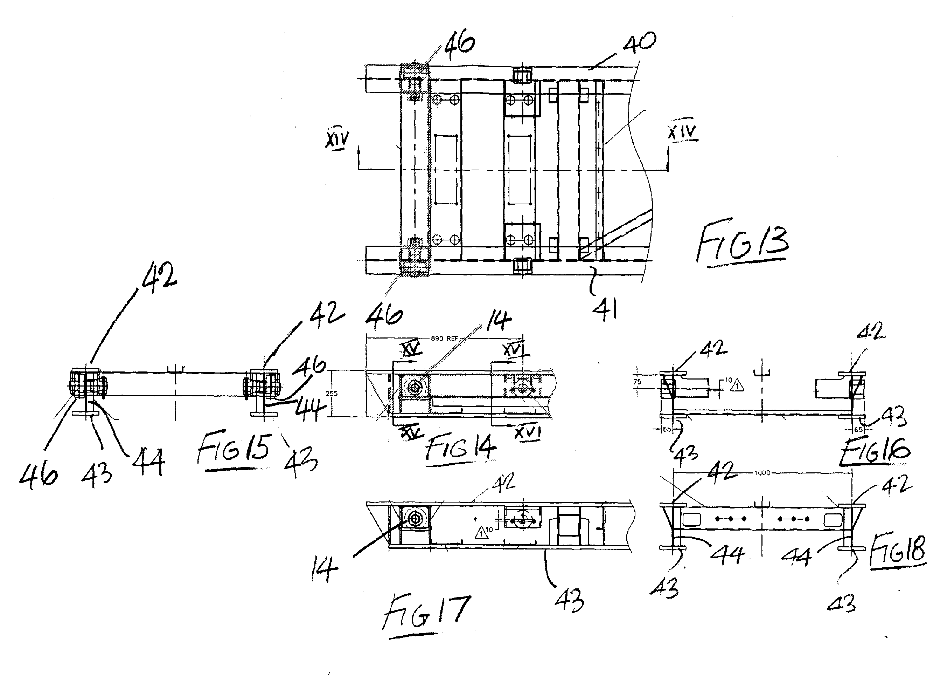

Referring in particular to Fig. 10 to 18, the rear trailer part 3 is shown in more detail. This is of generally similar construction to the front trailer part 2 and comprises a pair of spaced-apart longitudinal chassis beams 40, 41 of I section. Each beam 40, 41 has a flat top flange 42 and a flat bottom flange 43 interconnected by an upright web 44. The second roller assembly 14 comprises a pair of roller elements 46 rotatably mounted on an outside of each web 44 of the chassis beams 40, 41 for rolling engagement with a roller track formed by the top faces 27 of the lower flanges 25 of the front trailer part 2 longitudinal beams 18, 19. It will be noted also that the other roller assemblies 12, 13 and 15 roll along the top flange 42 of each beam 40, 41 of the rear trailer part 3 which forms a roller track for the rollers 30 of these roller assemblies 12, 13, 15.

In use, the front trailer part 2 and rear trailer part 3 can slide together and apart between the collapsed position shown in Fig. 1 and the extended position as shown in Fig. 2 by means of the roller assemblies 12, 13, 14, 15. The roller assembly 15 provides added support at the front end of the rear trailer part 3 when the trailer parts 2, 3 are in the collapsed stored position shown in Fig. 1. When extended as shown in Fig. 2 the roller assemblies 12 and 13 engage the top of the rear trailer part 3 and the roller assembly 14 engages the bottom flanges 25 of the longitudinal beams 18, 19 of the front trailer part 2. It will be noted that the second roller assembly 14 is located between the first roller assembly 12 and the third roller assembly 13 when in the extended position shown in Fig. 2.

It will be appreciated that the trailer 1 according to the invention facilitates movement of the two trailer parts 2, 3 between the collapsed and extended positions. Also, the roller arrangement and deployment provides good support between the trailer parts 2, 3 to resist any tendency for binding of the trailer parts 2, 3 when loaded.

A ram could be mounted between the trailer parts 2, 3 to aid sliding if desired.

The invention is not limited to the embodiments hereinbefore described which may be varied in both construction and detail within the scope of the appended claims.

## Claims

1. A sliding bogie link trailer (1) having a front trailer part (2) and a rear trailer part (3) which are slidably interconnected, the front trailer part (2) having a kingpin (5) for connection to a fifth wheel of a tractor vehicle for towing the trailer (1), the rear trailer part (3) having an axle (6,7) with ground-engaging wheels (8) and a fifth wheel (10) being mounted at a rear end of the rear trailer part (3) for towing another trailer, the two trailer parts (2,3) being slidably interconnected by means of first and second roller assemblies (12,14) which are provided spaced-apart on the trailer (1) for engagement between said front trailer part (2) and said rear trailer part (3), said first roller assembly (12) comprising rollers (30) mounted at a rear end of the front trailer part (2) for rolling engagement with a top (42) of an associated roller track on the rear trailer part (3), said second roller assembly (14) comprising rollers (46) mounted at a front end of the rear trailer part (3) for rolling engagement with an associated roller track (27) on the front trailer part (2), the rollers (46) of the second roller assembly (14) being engagable with an associated roller track formed by top faces (27) of lower flanges (25) of I beams (18,19) forming longitudinal chassis members of the front trailer part (2), said lower flanges (25) being offset inwardly on upright webs (26) of the I beams (18,19), **characterised in that** the first roller assembly (12) comprises a pair of roller elements (30) rotatably mounted on inner faces of webs (26) of the I beams (18,19) forming longitudinal chassis members of the front trailer part (2), and the second roller assembly (14) comprises a pair of roller elements (46) rotatably mounted on an outside of each web (44) of longitudinal chassis beams (40,41) of the rear trailer part (3).

2. The trailer (1) as claimed in claim 1 wherein a third roller assembly (13) is mounted on one (2) of said trailer parts (2,3) for engagement with the other (3) of said trailer parts (2,3).

3. The trailer (1) as claimed in claim 2 wherein a fourth roller assembly (15) is provided for engagement between the two trailer parts (2,3) when the trailer parts (2,3) are in a collapsed stored position.

4. The trailer (1) as claimed in claim 2 or claim 3 wherein the second roller assembly (14) is engagable between the two trailer parts (2, 3) intermediate the first and third roller assemblies (12,13) when the trailer parts (2, 3) are in a fully extended position.

5. The trailer (1) as claimed in any of claims 2 to 4 wherein the first and third roller assemblies (12,13) are mounted longitudinally spaced-apart at a rear end of the front trailer part (2) and the second roller assembly (14) is mounted at a front end of the rear trailer part (3).

6. The trailer (1) as claimed in any of claims 2 to 5 wherein the first and third roller assemblies (12, 13) engage with a top (42) of the rear trailer part (3).

7. The trailer (1) as claimed in any of claims 2 to 6 wherein the first and third roller assemblies (12,13) are engagable with top faces (42) of I beams forming longitudinal chassis members (40,41) of the rear trailer (3) part, said top faces (42) forming roller tracks.

## Patentansprüche

1. Ausziehbarer Anhänger (1) mit Drehgestellverbindung, der einen vorderen Anhängerabschnitt (2) und einen hinteren Anhängerabschnitt (3) aufweist, die verschiebbar miteinander verbunden sind, wobei der vordere Anhängerabschnitt (2) einen Königszapfen (5) zur Verbindung mit einem fünften Rad eines Zugfahrzeugs zum Abschleppen des Anhängers aufweist (1), wobei der hintere Anhängerabschnitt (3) eine Achse (6, 7) mit Rädern (8) aufweist, die mit dem Boden in Eingriff sind, und ein fünftes Rad (10) an einem hinteren Ende des hinteren Anhängerabschnitts (3) zum Abschleppen eines anderen Anhängers angebracht ist, wobei die beiden Anhängerabschnitte (2, 3) mittels erster und zweiter Rollenbaugruppen (12, 14) verschiebbar miteinander verbunden sind, wobei die Rollenbaugruppen an dem Anhänger (1) für den Eingriff zwischen dem vorderen Anhängerabschnitt (2) und dem hinteren Anhängerabschnitt (3) voneinander beabstandet sind, wobei die erste Rollenbaugruppe (12) Rollen (30) umfasst, die an einem hinteren Ende des vorderen Anhängerabschnitts (2) für einen rollenden Eingriff mit einer Oberseite (42) einer zugehörigen Rollenbahn am hinteren Anhängerabschnitt (3) angebracht sind, wobei die zweite Rollenbaugruppe (14) Rollen (46) umfasst, die an einem vorderen Ende des hinteren Anhängerabschnitts (3) für einen rollenden Eingriff mit einer zugehörigen Rollenbahn (27) am vorderen Anhängerabschnitt (2) angebracht sind, wobei die Rollen (46) der zweiten Rollenbaugruppe (14) mit einer zugehörigen Rollenbahn, die durch Oberseiten (27) von unteren Flanschen (25) von I-Trägern (18, 19) gebildet wird, die Längsfahrgestellelemente des vorderen Anhängerabschnitts (2) bilden, in Eingriff gebracht werden können, wobei die unteren Flansche (25) an aufrechten Stegen (26) der I-Träger (18, 19) nach innen versetzt angeordnet sind, **dadurch gekennzeichnet, dass** die erste Rollenbaugruppe (12) ein Paar Rollenelemente (30) umfasst, das drehbar an Innenflächen der Stege (26) der I-Träger (18, 19), die Längsfahrgestellelemente des vorderen Anhängerabschnitts (2) bilden, angebracht ist, und die zweite Rollenbaugruppe (14) ein Paar Rollenelemente (46) umfasst, das drehbar an einer Außenseite des jeweiligen Steges (44) von Längsfahrgestellträgern (40, 41) des hinteren Anhängerabschnitts (3) angebracht ist.

2. Anhänger (1) nach Anspruch 1, wobei eine dritte Rollenbaugruppe (13) an einem (2) der Anhängerabschnitte (2, 3) für den Eingriff mit dem anderen (3) der Anhängerabschnitte (2, 3) angebracht ist.

3. Anhänger (1) nach Anspruch 2, wobei eine vierte Rollenbaugruppe (15) für den Eingriff zwischen den beiden Anhängerabschnitten (2, 3) vorgesehen ist, wenn sich die Anhängerabschnitte (2, 3) in einer eingefahrenen Aufbewahrungsposition befinden.

4. Anhänger (1) nach Anspruch 2 oder Anspruch 3, wobei die zweite Rollenbaugruppe (14) zwischen den beiden Anhängerabschnitten (2, 3), die zwischen der ersten und dritten Rollenbaugruppe (12, 13) angeordnet sind, in Eingriff gebracht werden kann, wenn sich die Anhängerabschnitte (2,3) in einer vollständig ausgefahrenen Position befinden.

5. Anhänger (1) nach einem der Ansprüche 2 bis 4, wobei die erste und die dritte Rollenbaugruppe (12, 13) an einem hinteren Ende des vorderen Anhängerabschnitts (2) in Längsrichtung beabstandet angebracht sind und die zweite Rollenbaugruppe (14) an einem vorderen Ende des hinteren Anhängerabschnitts (3) angebracht ist.

6. Anhänger (1) nach einem der Ansprüche 2 bis 5, wobei die erste und die dritte Rollenbaugruppe (12, 13) mit einer Oberseite (42) des hinteren Anhängerabschnitts (3) in Eingriff sind.

7. Anhänger (1) nach einem der Ansprüche 2 bis 6, wobei die erste und die dritte Rollenbaugruppe (12, 13) mit oberen Flächen (42) der I-Träger in Eingriff gebracht werden können, die Längsfahrgestellelemente (40, 41) des hinteren Anhängerabschnitts (3) bilden, wobei die oberen Flächen (42) Rollenbahnen bilden.

## Revendications

1. Remorque (1) du type semi-remorque à bogie coulissant ayant une partie de remorque avant (2) et une partie de remorque arrière (3) qui sont mutuellement accouplées de manière coulissante, la partie de remorque avant (2) ayant un pivot d'attelage (5) à des fins d'accouplement à une sellette d'attelage d'un véhicule tracteur à des fins de remorquage de la remorque (1), la partie de remorque arrière (3) ayant un essieu (6, 7) muni de roues en contact avec le sol (8) et une sellette d'attelage (10) montée au niveau d'une extrémité arrière de la partie de remorque arrière (3) à des fins de remorquage d'une autre remorque, les deux parties de remorque (2, 3) étant mutuellement accouplées de manière coulissante au moyen de premier et second ensembles de roulements (12, 14) qui sont mis en oeuvre de manière espacée sur la remorque (1) à des fins de mise en prise entre ladite partie de remorque avant (2) et ladite partie de remorque arrière (3), ledit premier ensemble de roulements (12) comportant des roulements (30) montés au niveau d'une extrémité arrière de la partie de remorque avant (2) à des fins de mise en prise par roulement avec une partie supérieure (42) d'un chemin de roulement associé sur la partie de remorque arrière (3), ledit second ensemble de roulements (14) comportant des roulements (46) montés au niveau d'une extrémité avant de la partie de remorque arrière (3) à des fins de mise en prise par roulement avec un chemin de roulement associé (27) sur la partie de remorque avant (2), les roulements (46) du second ensemble de roulements (14) étant en mesure de se mettre en prise avec un chemin de roulement associé formé par des faces supérieures (27) d'ailes inférieures (25) de barres en I (18, 19) pour former des éléments de châssis longitudinaux de la partie de remorque avant (2), lesdites ailes inférieures (25) étant décalées vers l'intérieur sur les âmes verticales (26) des barres en I (18, 19), **caractérisée en ce que** le premier ensemble de roulements (12) comporte une paire d'éléments de roulements (30) montés de manière rotative sur des faces intérieures des âmes (26) des barres en I (18, 19) pour former des éléments de châssis longitudinaux de la partie de remorque avant (2), et le second ensemble de roulements (14) comporte une paire d'éléments de roulements (46) montés de manière rotative sur une partie extérieure de chaque âme (44) des barres de châssis longitudinales (40, 41) de la partie de remorque arrière (3).

2. Remorque (1) selon la revendication 1, dans laquelle un troisième ensemble de roulements (13) est monté sur l'une (2) desdites parties de remorque (2, 3) à des fins de mise en prise avec l'autre (3) desdites parties de remorque (2, 3).

3. Remorque (1) selon la revendication 2, dans laquelle un quatrième ensemble de roulements (15) est mis en oeuvre à des fins de mise en prise entre les deux parties de remorque (2, 3) quand les parties de remorque (2, 3) sont dans une position rangée escamotée.

4. Remorque (1) selon la revendication 2 ou la revendication 3, dans laquelle le second ensemble de roulements (14) est en mesure de se mettre en prise entre les deux parties de remorque (2, 3) de manière intermédiaire entre les premier et troisième ensembles de roulements (12, 13) quand les parties de remorque (2, 3) sont dans une position entièrement déployée.

5. Remorque (1) selon l'une quelconque des revendications 2 à 4, dans laquelle les premier et troisième ensembles de roulements (12, 13) sont montés de manière espacée dans le sens longitudinal au niveau d'une extrémité arrière de la partie de remorque avant (2) et le second ensemble de roulements (14) est monté au niveau d'une extrémité avant de la partie de remorque arrière (3).

6. Remorque (1) selon l'une quelconque des revendications 2 à 5, dans laquelle les premier et troisième ensembles de roulements (12, 13) entrent en prise avec une partie supérieure (42) de la partie de remorque arrière (3).

7. Remorque (1) selon l'une quelconque des revendications 2 à 6, dans laquelle les premier et troisième ensembles de roulements (12, 13) sont en mesure de se mettre en prise avec des faces supérieures (42) de barres en I pour former des éléments de châssis longitudinaux (40, 41) de la partie de remorque arrière (3), lesdites faces supérieures (42) formant des chemins de roulement.
